# FASCICULE DE BREVET EUROPEEN

(11) **EP 2 923 130 B1**
(45) Date de publication et mention de la délivrance du brevet: **01.08.2018**
(21) Numéro de dépôt: 13795233.9
(22) Date de dépôt: 22.11.2013
(51) Int. Cl.: F16L 21/035, F16L 57/06, F16L 58/18

(54) **JONCTION TUBULAIRE**
ROHRFÖRMIGE VERBINDUNG
TUBULAR JOINT

(30) Priorité: 22.11.2012 FR 1261137
(43) Date de publication de la demande: 30.09.2015
(73) Titulaire: Saint-Gobain PAM, 21 Avenue Camille Cavallier 54700 Pont-à-Mousson (FR)
(72) Inventeur: GRASSER, Johan, F-57000 Metz (FR); GENELOT, Pierre, F-54700 Norroy (FR); GRASSI, Gabriel, F-54700 Pont A Mousson (FR)
(74) Mandataire: Lavoix
(86) Numéro de dépôt international: PCT/EP2013/074476
(87) Numéro de publication internationale: WO 2014/079974

(56) Documents cités:
- WO-A1-93/07411
- DE-A1- 10 252 981
- FR-A1- 2 234 508
- FR-A1- 2 781 546
- FR-A5- 2 196 050

## Description

La présente invention concerne une jonction tubulaire. On connaît dans l'état de la technique des jonctions tubulaires comprenant un bout à emboîtement et un bout uni associé. Lorsque le bout uni est introduit dans le bout à emboîtement, il se peut que l'extrémité du bout uni heurte le fond d'emboîtement et endommage celui-ci. Ceci est particulièrement problématique dans le cas où le bout à emboîtement et le bout uni sont munis intérieurement et extérieurement de revêtements, étant donné que les revêtements peuvent être endommagés à l'emplacement des zones de contact, là où le bout uni vient cogner contre le fond d'emboîtement, favorisant ainsi des amorces de corrosion
WO 93/07411 A1 divulgue une jonction tubulaire comportant un bout à emboîtement, un bout uni insérable dans le bout à emboîtement, le bout à emboîtement comprenant un corps de base muni d'un fond d'emboîtement, le bout à emboîtement comprenant en outre un organe de protection disposé sur le fond d'emboîtement protégeant le fond d'emboîtement d'un contact avec le bout uni, l'organe de protection comprenant une butée axiale de fond et une jupe, la jupe et le bout uni étant adaptés pour permettre une déviation angulaire du bout uni par rapport au bout à emboîtement de l'ordre de 3°.
FR 2 781 546 A1 divulgue une jonction tubulaire comprenant un bout à emboîtement et un bout uni, le bout à emboîtement comprenant un corps de base muni d'un fond d'emboîtement et d'une gorge d'emboîtement logeant un joint d'étanchéité. Pour éviter autant que possible ce contact du bout uni en fond d'emboîtement, il est recommandé de ne pas insérer le bout uni à fond dans le bout à emboîtement et de laisser ainsi un interstice axial entre le bout uni et le fond d'emboîtement. Cet interstice favorise cependant l'apparition d'eaux stagnantes entre le bout uni et le bout à emboîtement, entraînant à terme le dépôt et l'accumulation de saletés dans l'interstice entre l'extrémité du bout uni et le fond d'emboîtement. Ces eaux stagnantes et/ou dépôts de saletés génèrent alors des perturbations du fil d'eau qui nuisent au bon écoulement de l'eau transportée.

L'invention a pour but de remédier à ces inconvénients et de proposer un bout à emboîtement pour jonction tubulaire qui ait une durée de vie augmentée.

A cet effet, l'invention à pour objet une jonction tubulaire selon la la revendication 1.

Selon des modes de réalisation particuliers de l'invention, la jonction tubulaire peut comporter l'une ou plusieurs des caractéristiques des revendications dépendantes.

Selon des modes de réalisation particuliers de l'invention, le bout à emboîtement peut en outre comporter éventuellement l'une ou plusieurs des caractéristiques suivantes :
- l'organe de protection est un anneau de protection ;
- l'organe de protection a une section transversale radiale non circulaire, et notamment une forme tronconique creuse ;
- le corps de base comporte une gorge de fond et l'organe de protection est disposé dans la gorge de fond ;
- l'organe de protection est en une matière ayant une dureté Shore A comprise entre 40 et 80 ;
- l'organe de protection est en une matière élastomère, notamment un copolymère EPDM, un copolymère NBR, un copolymère SBR, du polyéthylène chlorosulfoné (CSM), un caoutchouc naturel ou un élastomère thermoplastique, ou en une matière thermoplastique, notamment en PP, en PE ou en PET amorphe ;
- le corps de base comprend une collerette d'entrée et le fond d'emboîtement s'étend radialement vers l'intérieur, et éventuellement vers l'extérieur, au-delà de la collerette d'entrée ;
- le corps de base comprend une âme et un revêtement disposé au moins sur le fond d'emboîtement.

L'invention sera mieux comprise à la lecture de la description qui va suivre, donnée uniquement à titre d'exemple et faite en se référant aux dessins annexés, sur lesquels :
- la figure 1 est une vue en coupe d'un premier mode de réalisation d'une jonction tubulaire selon l'invention, le bout uni étant dans une position intermédiaire lors de l'introduction du bout uni dans le bout à emboîtement ;
- la figure 2 est une vue analogue à celle de la figure 1, le bout uni étant dans une position en fin de course par rapport au bout à emboîtement et en contact avec l'organe de protection ;
- la figure 3 est une vue en coupe d'un deuxième mode de réalisation de la jonction tubulaire selon l'invention, la jonction tubulaire étant dans la configuration alignée et emboîtée ;
- la figure 4 est une vue en coupe du deuxième mode de réalisation de la jonction tubulaire selon l'invention, la jonction étant dans une configuration déviée et emboîtée ;
- la figure 5 est une vue en coupe d'un troisième mode de réalisation de la jonction tubulaire selon l'invention, qui est une variante de la jonction des figures 3 et 4 ; et
- la figure 6 est une vue en coupe d'un quatrième mode de réalisation de la jonction tubulaire selon l'invention, qui est une variante de la jonction de la figure 7.

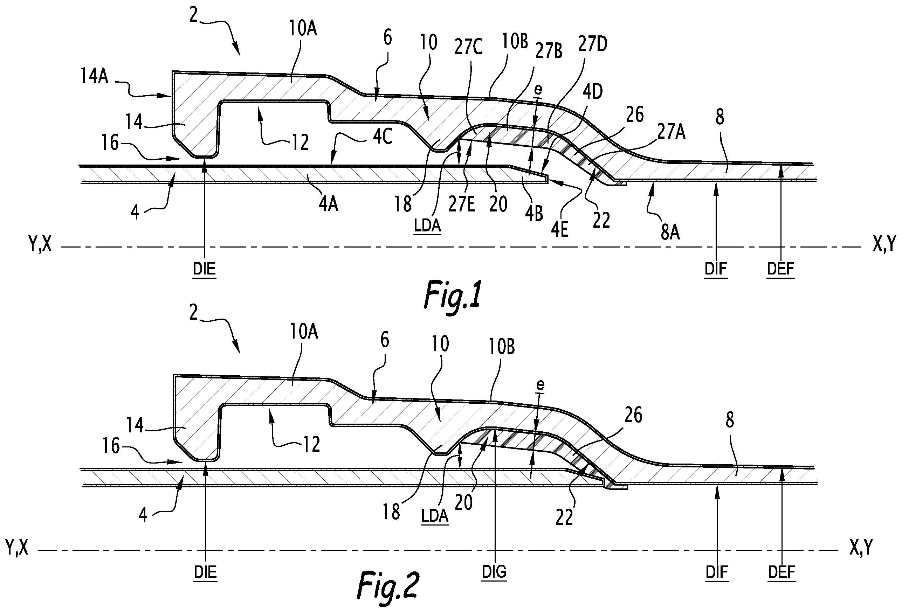

Les figures 1, 2 et 5 omettent le joint d'étanchéité logé dans la gorge d'emboîtement.
Sur la figure 1 est représentée une jonction tubulaire selon l'invention, désignée par la référence générale 2.

La jonction tubulaire 2 comprend un bout uni 4 d'un premier tuyau et un bout à emboîtement 6 d'un second tuyau. Le bout uni 4 s'étend selon un axe central X-X et le bout à emboîtement 6 s'étend selon un axe central Y-Y. La jonction tubulaire 2 a une configuration alignée dans laquelle les deux axes centraux X-X et Y-Y coïncident et forment un axe central de la jonction tubulaire. Dans ce qui suit, les expressions « radialement » et « axialement » utilisées dans le contexte d'un objet se réfèrent à l'axe central de cet objet. La jonction tubulaire 2 a également une configuration déviée, dans laquelle les deux axes centraux X-X et Y-Y forment un angle non nul entre eux.

Le bout uni 4 comprend une portion courante 4A ainsi qu'une extrémité chanfreinée 4B. La portion courante 4A a une surface extérieure 4C de bout uni, qui est en l'occurrence cylindrique à section circulaire. L'extrémité chanfreinée 4B a une surface tronconique 4D. Le bout uni 4 se termine par une face frontale 4E, en l'occurrence annulaire.

Le bout uni 4 est insérable dans le bout à emboîtement 6.

Le bout à emboîtement 6 est relié à un fût 8 et forme avec celui-ci un tuyau. Le fût 8 est sensiblement cylindrique et a un diamètre intérieur DIF et un diamètre extérieur DEF. Le fût 8 s'étend également concentriquement autour de l'axe central Y-Y. Le fût 8 a une surface intérieure 8A.

Le bout à emboîtement 6 est muni d'un corps de base 10. Ce corps de base 10 est relié d'un seul tenant au fût 8.

Le corps de base 10 comprend une âme 10A et un revêtement 10B disposé sur l'âme. L'âme 10A est en métal, par exemple en fonte. Le revêtement 10B est par exemple un revêtement anticorrosion, notamment à base de zinc sur la surface extérieure de l'âme 10A et à base d'époxy ou de zinc sur la surface intérieure et sur la surface frontale de l'âme 10A. Le fût 8 comprend une âme et un revêtement en des matières respectivement identiques aux matières de l'âme 10A et du revêtement 10B.

Le bout uni 4 comprend une âme en une matière identique à celle de l'âme 10A et un revêtement disposé sur cette âme. Le revêtement du bout uni 4 est par exemple un revêtement anticorrosion, notamment à base de zinc sur la surface extérieure de l'âme et à base d'époxy, de zinc ou de ciment sur la surface intérieure et sur la surface frontale de l'âme.

Le corps de base 10 est muni d'une gorge d'emboîtement 12. Le bout à emboîtement 6 comprend une collerette d'entrée 14 définissant une ouverture d'entrée 16 du bout à emboîtement 6 dans laquelle est inséré le bout uni 4. La collerette d'entrée 14 a un diamètre intérieur d'entrée DIE. La collerette d'entrée 14 a une face frontale d'entrée 14A, qui est la face frontale du bout à emboîtement. Dans ce qui suit, le terme « proximal » signifie tourné vers la collerette d'entrée 14 et le terme « distal » signifie tourné à l'opposé de cette collerette d'entrée 14.

Le bout à emboîtement 6 comprend également une nervure intermédiaire 18. La gorge d'emboîtement 12 est délimitée axialement par la collerette d'entrée 14 et la nervure intermédiaire 18.

La jonction tubulaire 2 comprend également un joint d'étanchéité, non représenté sur les figures 1 et 2, qui est disposé dans la gorge d'emboîtement 12 et s'applique contre le bout uni 4 et le bout à emboîtement 6. En l'occurrence, le joint d'étanchéité est du type automatique, c'est-à-dire que l'étanchéité est obtenue automatiquement par compression radiale du joint entre le bout uni 4 et le bout à emboîtement 6 lors de l'insertion du bout uni, sans avoir recours à une bride de serrage pour comprimer le joint d'étanchéité.

Le bout à emboîtement 6 comporte également une gorge de fond 20 et un fond d'emboîtement 22. La gorge de fond 20 a un diamètre intérieur maximal DIG. La nervure intermédiaire 18 sépare la gorge de fond 20 de la gorge d'emboîtement 12. Le fond d'emboîtement 22 délimite la gorge de fond du côté axial du fût 8.

Le fond d'emboîtement 22 s'étend radialement vers l'intérieur au-delà du diamètre intérieur d'entrée DIE de la collerette d'entrée 14 et jusqu'au diamètre intérieur du fût 8 DIF. Le fond d'emboîtement 22 s'étend également radialement vers l'extérieur au-delà du diamètre intérieur d'entrée DIE et s'étend vers le fond de la gorge de fond 20. En l'occurrence, le fond d'emboîtement 22 est une surface tronconique s'évasant vers la collerette d'entrée 14. L'inclinaison de cette surface tronconique par rapport à l'axe central Y-Y est par exemple comprise entre 30° et 70°.

Le bout à emboîtement 6 comprend en outre un organe de protection 26 qui est disposé sur le fond d'emboîtement 22 et qui protège ce fond d'emboîtement 22 d'un contact avec le bout uni 4.

En l'occurrence, l'organe de protection 26 est un anneau de protection s'étendant autour de l'axe central Y-Y du bout à emboîtement 6. L'organe de protection 26 a une section transversale non circulaire. Cette section transversale est prise selon un plan radial par rapport à l'axe central Y-Y. Dans le cas présent, à l'état non sollicité, l'organe de protection 26 a une forme tronconique creuse et est disposé sur le fond d'emboîtement 22 ainsi que sur le fond de la gorge de fond 20.

L'organe de protection 26 comprend une butée axiale de fond 27A, disposée sur le fond d'emboîtement 22, et une jupe 27B disposée sur le fond de la gorge de fond 20. La jupe 27B a une extrémité proximale 27C, une extrémité distale 27D et une surface intérieure de jupe 27E. L'extrémité proximale 27C est disposée du côté de la nervure intermédiaire 18 et l'extrémité distale 27D est disposée du côté du fût 8 et est adjacente à la butée axiale de fond 27A.

A l'état emboîté du bout uni 4 dans le bout à emboîtement 6 et dans la configuration alignée de la figure 2, la face frontale 4E du bout uni s'applique sur tout son pourtour contre la butée axiale de fond 27A. Dans cette configuration alignée, la partie courante 4A est complètement hors de contact avec l'organe de protection 26 et uniquement la face frontale 4E et l'extrémité chanfreinée 4D sont en contact avec la butée axiale de fond 27A de l'organe de protection, le bout uni 4 étant complètement hors de contact avec la jupe 27B.

La jupe 27B et le bout uni 4 sont adaptés pour permettre une déviation angulaire du bout uni 4 par rapport au bout à emboîtement 6, lorsque le bout uni 4 est en contact avec une partie de la butée axiale de fond 27A, qui est d'au moins 2°, de préférence d'au moins 3° et en particulier d'au moins 5°. Dans cette configuration déviée, le bout uni 4 est partiellement en contact avec la butée axiale de fond 27A, et partiellement en contact ou complètement hors de contact avec la jupe 27B. Dans cet état, le contact entre le bout uni 4 et l'organe de protection 26 est donc établi sur la totalité ou sur une partie du pourtour de l'organe de protection 26.

Dans la configuration alignée de la jonction tubulaire 2 et en fonction des diamètres des tuyaux, la surface intérieure 27E de la jupe 27B et la surface extérieure 4C du bout uni sont séparées d'une distance radiale maximale LDA comprise entre 0,8% et 3,5% du diamètre intérieur maximal DIG de la gorge de fond 20. En fonction des diamètres des tuyaux assemblés, cette distance LDA est par exemple comprise entre 3mm et 20mm et de préférence entre 4,75mm et 19,85mm.

La jupe 27B a une épaisseur e, qui est mesurée perpendiculairement aux surfaces de la jupe 27B. L'épaisseur e diminue d'un côté axial tourné vers la collerette d'entrée 14 vers un côté axial tourné vers le fût 8.

L'organe de protection 26 est plaqué contre le fond d'emboîtement 22 et contre le fond de la gorge de fond 20, son diamètre extérieur étant en tous points de contact supérieur au diamètre intérieur du fond d'emboîtement 22 et du fond de la gorge de fond 20.

L'organe de protection 26 s'applique par ailleurs avec son extrémité tournée vers le fût 8 sur la surface intérieure 8A du fût 8 sur une distance axiale d'environ 3 mm. Afin d'assurer la continuité du fil de liquide transporté, la portion de l'organe de protection qui recouvre la surface intérieure du fût 8 présente une épaisseur ne dépassant pas 1 mm.

L'organe de protection 26 est en une matière plastique, notamment en une matière élastomère telle que par exemple un copolymère EPDM (éthylène - propylène - diène), un copolymère NBR (acrylonitrile - butadiène), un copolymère SBR (styrène - butadiène), du polyéthylène chlorosulfoné, un caoutchouc naturel ou un élastomère thermoplastique (TPE), ou en une matière thermoplastique telle que par exemple du PP (polypropylène), du PE (polyéthylène) ou du PET (polyéthylène téréphtalate) amorphe.

Dans le cas où l'organe de protection 26 est un élastomère, celui-ci a une dureté Shore A comprise entre 40 et 80.

La jonction tubulaire 2 selon l'invention fonctionne de la manière suivante :
Lors de l'assemblage, le bout uni 4 est introduit dans le bout à emboîtement 6 en franchissant la collerette d'entrée 14 et l'introduction est poursuivie en direction du fond d'emboîtement 22.

Lorsque le bout uni 4 arrive au niveau du fond d'emboîtement 22, il s'applique contre l'organe de protection 26 et reste hors de contact avec le corps de base 10 au moins au niveau de l'organe de protection 26. Cette configuration est représentée sur la figure 2.

A l'état assemblé, le bout uni 4 comprime axialement l'organe de protection 26. Plus précisément, le bout uni comprime axialement la butée axiale de fond 27A de l'organe de protection. Dans cette configuration, lors de l'écoulement de liquide à l'intérieur de la jonction tubulaire 2, l'organe de protection 26 est déformé et comble l'interstice axial entre le bout uni 4 et le bout à emboîtement 6, assurant ainsi le respect du fil de liquide transporté.

D'une part, le bout à emboîtement 6, comprenant l'organe de protection 26 selon l'invention, évite la détérioration du bout à emboîtement 6 ou du bout uni 4 lors de l'introduction du bout uni dans le bout à emboîtement 6.

D'autre part, l'organe de protection 26 assure le respect du fil de liquide et évite les liquides stagnants dans l'interstice axial entre le bout uni 4 et le bout à emboîtement 6.

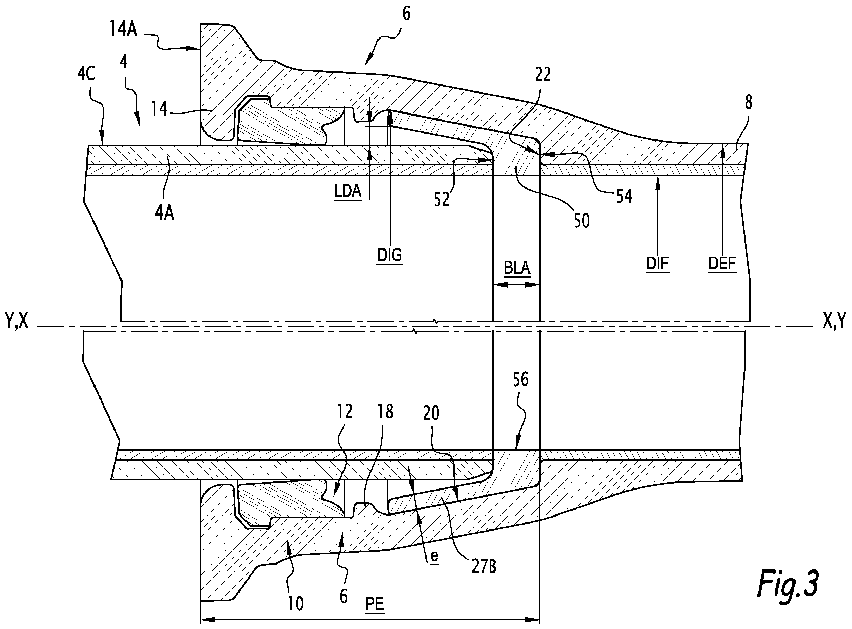

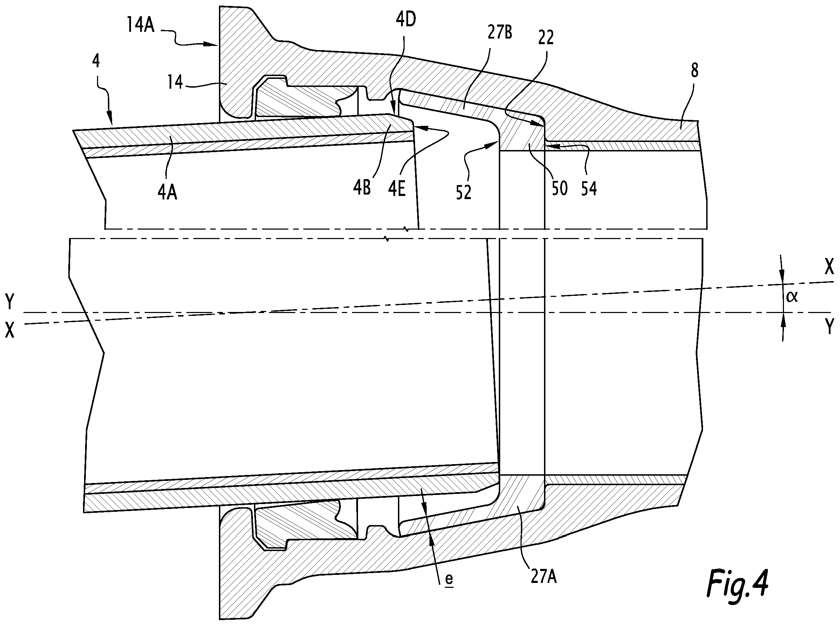

Sur les figures 3 et 4 est représentée une jonction tubulaire 2 selon un deuxième mode de réalisation de l'invention. Cette jonction tubulaire diffère de la jonction tubulaire des figures 1 et 2 uniquement par ce qui suit. Les éléments analogues portent les mêmes références.

Le fond d'emboîtement 22 s'étend perpendiculairement par rapport à l'axe central Y-Y ou est incliné au plus de 3° par rapport à l'axe Y-Y. Le fond de gorge 20 est tronconique et est adjacent au fond d'emboîtement 22. L'inclinaison du fond de gorge 20 par rapport à l'axe central Y-Y est comprise entre 3° et 25°.

La jupe 27B a une épaisseur e qui est sensiblement constante sur toute l'étendue axiale de la jupe. L'épaisseur e est également mesurée perpendiculairement aux surfaces de la jupe 27B.

Dans la configuration alignée visible sur la figure 3 et en fonction des diamètres des tuyaux, la distance radiale maximale LDA est comprise entre 0,9x et 3x l'épaisseur e de la jupe.

La butée axiale de fond 27A est formée par une nervure de butée 50, adjacente à la jupe 27B et définissant une surface de butée 52 tournée vers l'entrée du bout à emboîtement. La nervure de butée 50 s'applique sur le fond d'emboîtement 22, en particulier sur la totalité du fond d'emboîtement avec une surface 54. La nervure de butée 50 a une largeur axiale BLA.

La surface de butée 52 s'étend perpendiculairement par rapport à l'axe central Y-Y ou est incliné au plus de 3° par rapport à l'axe central Y-Y.

La nervure de butée 50 définit une surface intérieure libre 56. La surface intérieure libre est cylindrique à section circulaire. La surface intérieure libre 56 a un diamètre intérieur sensiblement identique au diamètre intérieur DIF du fût 8, et de préférence également sensiblement identique au diamètre intérieur du bout uni 4. Ainsi, dans la configuration alignée de la figure 3, la jonction tubulaire 2 forme une surface intérieure continue d'un même diamètre s'étendant du bout uni 4 jusqu'au fût 8.

Le bout à emboîtement 6 définit une profondeur d'emboîtement PE, qui est la distance entre la face frontale d'entrée 14A du bout à emboîtement 6 et l'entrée du fût 8. La largeur axiale BLA est avantageusement comprise entre 4% et 15% de la profondeur d'emboîtement PE.

Dans la configuration alignée de la figure 3 et à l'état emboîté de la jonction tubulaire 2, la face frontale 4E du bout uni 4 est en contact avec la surface de butée 52 et le bout uni 4 est complètement hors de contact avec la jupe 27B.

Sur la Figure 4 est représentée la jonction tubulaire 2 de la Figure 3 dans une configuration déviée et emboîtée.

Dans cette configuration, la face frontale 4E est en contact avec la butée axiale de fond 27A d'un seul côté. Le bout uni 4 est complètement hors de contact avec l'organe de protection 26 à tous les autres emplacements de l'organe de protection 26. Cependant, dans une configuration déviée maximale non représentée, le bout uni peut également être partiellement en contact avec la butée axiale de fond 27A et partiellement en contact avec la jupe 27B.

Dans la configuration déviée, l'axe central Y-Y et l'axe central X-X forment un angle α entre eux. La déviation angulaire du bout uni 4 par rapport au bout à emboîtement 6 formée par cet angle α est d'au moins 2°, de préférence d'au moins 3° eten particulier d'au moins 5°.

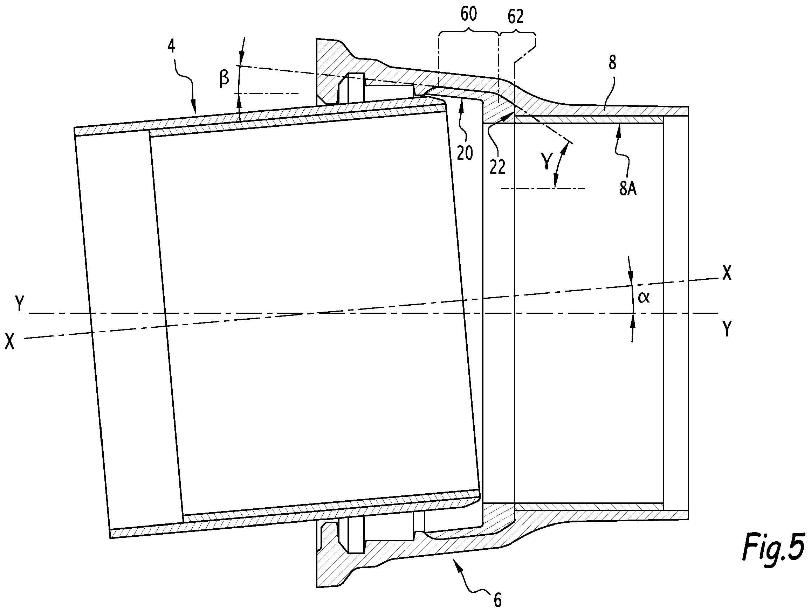

Sur la figure 5 est représentée une jonction tubulaire 2 selon un troisième mode de réalisation de l'invention. Cette jonction tubulaire diffère de la jonction tubulaire des Figures 3 et 4 uniquement par ce qui suit. Les éléments analogues portent les mêmes références.

La gorge de fond 20 a une portion axiale proximale 60 inclinée d'un premier angle β par rapport l'axe central Y-Y et une portion axiale distale 62 inclinée par rapport à l'axe central Y-Y, d'un second angle γ qui est supérieur au premier angle β. Chacune des portions axiales proximale 60 et distale 62 est tronconique.

En conséquence, l'organe de protection 26 a une surface extérieure biseautée, complémentaire de la forme de la gorge de fond 20.

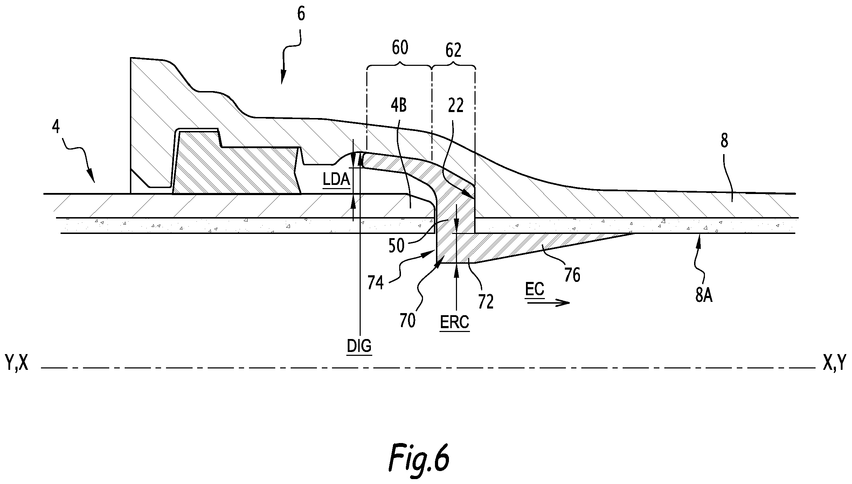

Sur la Figure 6 est représentée une jonction tubulaire selon un quatrième mode de réalisation. Cette jonction tubulaire 2 diffère de la jonction tubulaire de la Figure 5 uniquement par ce qui suit. Les éléments analogues portent les mêmes références.

L'organe de protection 26 comprend une chicane 70 s'étendant radialement à l'intérieur de la surface intérieure 8A du fût 8. La chicane 70 est adaptée pour perturber l'écoulement du liquide circulant dans la jonction tubulaire selon un sens d'écoulement EC. L'effet brassant engendré par la chicane 70 permet alors dans certains cas, plus particulièrement lorsque le liquide transporté est chargé en particules abrasives, de minimiser l'abrasion des tuyaux, notamment sur la génératrice basse.

En l'occurrence, la chicane 70 comprend une première portion 72 adaptée pour perturber l'écoulement du liquide transporté, et qui prolonge la nervure de butée 50 radialement vers l'intérieur sur tout le pourtour de la nervure de butée.. Cette première portion 72 a une largeur axiale identique à la largeur BLA de la nervure de butée 50 et forme une surface frontale de chicane 74 qui est inclinée de plus de 75° par rapport à l'axe central Y-Y. La surface frontale de chicane 74 est dirigée vers l'entrée du bout à emboitement 6 et donc vers l'amont du fluide circulant dans la jonction tubulaire 2.

La première portion 72 a une épaisseur radiale ERC qui est d'au moins 2mm.

La chicane 70 comprend en outre une seconde portion 76 adaptée pour protéger la portion du fût 8 située directement en aval de la chicane. Cette seconde portion 76 est liée à la première portion 72 et s'étend axialement du côté opposé à la surface frontale 74. La seconde portion couvre une partie de la surface intérieure 8A du fût 8. La seconde portion 76 a une largeur axiale qui est au moins 1 fois la largeur axiale de la nervure de butée 50. La seconde portion 76 a une forme s'évasant vers le côté opposé à la surface frontale 74.

Les caractéristiques d'un mode de réalisation peuvent être appliquées aux autres modes de réalisation.

Le mode de réalisation des figures 1 et 2 est plus particulièrement adapté à des tuyaux d'assainissement transportant des eaux usées, tandis que les modes de réalisation des figures 3 à 6 sont plus particulièrement adaptés à des tuyaux transportant des fluides abrasifs, par exemple une eau chargée en particules solides abrasives.

## Revendications

1. Jonction tubulaire, du type comprenant
- un bout à emboîtement (6) relié à un fût (8), et
- un bout uni (4) insérable dans le bout à emboîtement (6) et comprenant une portion courante,
le bout à emboîtement (6) comprenant un corps de base (10) muni d'une gorge de fond (20) avec un fond d'emboîtement (22), le bout à emboîtement (6) comprenant en outre un organe de protection (26) disposé sur le fond d'emboîtement (22) de la gorge de fond et protégeant le fond d'emboîtement d'un contact avec le bout uni (4), l'organe de protection (26) comprenant une butée axiale de fond (27A) et une jupe (27B), dans lequel
- le corps de base (10) est muni d'une gorge d'emboîtement (12),
- la jonction tubulaire (2) comprend un joint d'étanchéité disposé dans la gorge d'emboîtement (12) et appliqué contre le bout uni (4) et le bout à emboîtement (6), et
- la jupe et le bout uni sont adaptés pour permettre une déviation angulaire du bout uni (4) par rapport au bout à emboîtement (6) d'au moins 2°, de préférence d'au moins 3° et en particulier d'au moins 5°, lorsque le bout uni est en contact partiel avec la butée axiale de fond (27A).

2. Jonction tubulaire selon la revendication 1, dans laquelle :
- le bout uni (4) comprend une surface extérieure de bout uni (4C),
- la jupe (27B) comprend une surface intérieure de jupe (27E), et
- la distance radiale maximale (LDA) entre la surface intérieure de jupe (27E) et la surface extérieure de bout uni,(4C) est comprise entre 0,8% et 3,5% du diamètre intérieur maximal DIG de la gorge de fond (20) lorsque le bout uni et le bout à emboîtement sont alignés.

3. Jonction tubulaire selon la revendication 2, dans laquelle la distance radiale maximale (LDA) est comprise entre 3mm et 20mm, de préférence entre 4,75mm et 19,85mm.

4. Jonction tubulaire selon l'une quelconque des revendications 1 à 3, dans laquelle la jupe (27B) a une épaisseur e, et dans laquelle la distance radiale maximale (LDA) est comprise entre 0,9x et 3x l'épaisseur e.

5. Jonction tubulaire selon l'une quelconque des revendications 1 à 4, **caractérisée en ce que** l'organe de protection (26) est un anneau de protection.

6. Jonction tubulaire selon l'une quelconque des revendications 1 à 5, **caractérisée en ce que** l'organe de protection (26) s'applique avec son extrémité tournée vers le fût (8) sur une surface intérieure (8A) du fût sur une distance axiale de 3mm, et en particulier **en ce que** la portion de l'organe de protection qui recouvre la surface intérieure du fût présente une épaisseur ne dépassant pas 1mm.

7. Jonction tubulaire selon l'une quelconque des revendications précédentes, dans laquelle la butée axiale de fond (27A) est formée par une nervure de butée (50), adjacente à la jupe (27B) et définissant une surface de butée (52) pour le bout uni, la nervure de butée ayant une largeur axiale (BLA).

8. Jonction tubulaire selon la revendication 7, dans laquelle le bout à emboîtement définit une profondeur d'emboîtement PE, qui est la distance axiale entre une face frontale (14A) du bout à emboîtement et l'entrée du fût (8), et dans laquelle le rapport de la largeur axiale (BLA) à la profondeur d'emboîtement (PE) est compris entre 0,04 et 0,15.

9. Jonction tubulaire selon la revendication 7 ou 8, dans laquelle l'organe de protection (26) comprend une chicane (70) s'étendant radialement à l'intérieur d'une surface intérieure du fût (8).

10. Jonction tubulaire selon la revendication 9, dans laquelle la chicane (70) comprend une première portion (72) qui prolonge la nervure de butée (50) radialement vers l'intérieur et s'étend sur tout le pourtour de la nervure de butée, la première portion (72) formant une surface frontale de chicane (74) qui est inclinée de plus de 75° par rapport à l'axe central du bout à emboitement, et qui en particulier est perpendiculaire à l'axe central (Y-Y) du bout à emboîtement.

11. Jonction tubulaire selon la revendication 9 ou 10, dans laquelle la chicane comprend une seconde portion (76) s'étendant axialement à l'opposé de la surface frontale de chicane (74) et sur la surface intérieure du fût.

12. Jonction tubulaire selon l'une quelconque des revendications précédentes, dans laquelle l'organe de protection (26) est en une matière ayant une dureté Shore A comprise entre 40 et 80 et/ou l'organe de protection (26) est en une matière élastomère, notamment un copolymère EPDM, un copolymère NBR, un copolymère SBR, du polyéthylène chlorosulfoné, un caoutchouc naturel ou un élastomère thermoplastique, ou en une matière thermoplastique, notamment en PP, en PE ou en PET amorphe.

13. Jonction tubulaire selon l'une quelconque des revendications précédentes, **caractérisé en ce que** le corps de base comprend une collerette d'entrée (14) et le fond d'emboîtement (22) s'étend radialement vers l'intérieur, et éventuellement vers l'extérieur, au-delà de la collerette d'entrée (14).

14. Jonction tubulaire selon l'une quelconque des revendications précédentes, **caractérisé en ce que** le corps de base (10) comprend une âme (10A) et un revêtement (10B) disposé au moins sur le fond d'emboîtement (22).

## Patentansprüche

1. Rohrverbindung, des Typs aufweisend:
- ein Muffen-Ende (6), das mit einem Rohr (8) verbunden ist, und
- ein Glatt-Ende (4), das in das Muffen-Ende (6) einsetzbar ist und das einen Laufabschnitt aufweist,
wobei das Muffen-Ende (6) einen Grundkörper (10) aufweist, der versehen ist mit einer Boden-Kehle (20) mit einem Muffen-Boden (22),
wobei das Muffen-Ende (6) ferner aufweist ein Schutzorgan (26), das an dem Muffen-Boden (22) der Boden-Kehle angeordnet ist und den Muffen-Boden schützt vor einem Kontakt mit dem Glatt-Ende (4), wobei das Schutzorgan (26) aufweist einen axialen Boden-Anschlag (27A) und einen Rock (27B),
wobei
- der Grundkörper (10) versehen ist mit einer Muffen-Kehle (12),
- die Rohrverbindung (2) aufweist ein Dichtungsteil, das in der Muffen-Kehle (12) angeordnet ist und gegen das Glatt-Ende (4) und das Muffen-Ende (6) anliegt, und
- der Rock und das Glatt-Ende angepasst sind, um eine Winkelabweichung des Glatt-Endes (4) bezüglich des Muffen-Endes (6) von wenigstens 2°, bevorzugt von wenigstens 3°, und insbesondere von wenigstens 5° zu erlauben, wenn das Glatt-Ende in Teilkontakt mit dem axialen Boden-Anschlag (27A) ist.

2. Rohrverbindung gemäß Anspruch 1, wobei:
- das Glatt-Ende (4) aufweist einen äußere Fläche des Glatt-Endes (4C),
- der Rock (27B) aufweist eine innere Fläche des Rocks (27E), und
- die maximale radiale Distanz (LDA) zwischen der inneren Fläche des Rocks (27E) und der äußeren Fläche des Glatt-Rohrs (4C) zwischen 0,8% und 3,5% des maximalen Innendurchmessers DIG der Boden-Kehle (20) liegt, wenn das Glatt-Ende und das Muffen-Ende zueinander fluchten.

3. Rohrverbindung gemäß Anspruch 2, wobei die maximale radiale Distanz (LDA) zwischen 3mm und 20mm, bevorzugt zwischen 4,75mm und 19,85mm, liegt.

4. Rohrverbindung gemäß irgendeinem der Ansprüche 1 bis 3, wobei der Rock (27B) eine Dicke e hat, und wobei die maximale radiale Distanz (LDA) zwischen 0,9x und 3x der Dicke e liegt.

5. Rohrverbindung gemäß irgendeinem der Ansprüche 1 bis 4, **dadurch gekennzeichnet, dass** das Schutzorgan (26) ein Schutzring ist.

6. Rohrverbindung gemäß irgendeinem der Ansprüche 1 bis 5, **dadurch gekennzeichnet, dass** das Schutzorgan (26) mit seinem zu dem Rohr (8) hin gewandten Ende über eine axiale Distanz von 3mm an einer inneren Fläche (8A) des Rohrs anliegt, und insbesondere dass der Abschnitt des Schutzorgans, der die innere Fläche des Rohrs abdeckt, eine Dicke hat, die 1mm nicht überschreitet.

7. Rohrverbindung gemäß irgendeinem der vorhergehenden Ansprüche, wobei der axiale Boden-Anschlag (27A) von einer Anschlagrippe (50) gebildet ist, die benachbart zu dem Rock (27B) ist und eine Anschlagfläche (52) für das Glattende definiert, wobei die Anschlagrippe eine axiale Breite (BLA) hat.

8. Rohrverbindung gemäß Anspruch 7, wobei das Muffen-Ende eine Muffen-Tiefe PE definiert, welche die axiale Distanz zwischen einer Stirnfläche (14A) des Muffen-Endes und dem Eingang des Rohrs (8) ist, und wobei das Verhältnis der axialen Breite (BLA) zu der Muffen-Tiefe (PE) zwischen 0,04 und 0,15 liegt.

9. Rohrverbindung gemäß Anspruch 7 oder 8, wobei das Schutzorgan (26) einen Ablenkteil (70) aufweist, der sich von einer Innenfläche des Rohrs (8) radial nach innen erstreckt.

10. Rohrverbindung gemäß Anspruch 9, wobei der Ablenkteil (70) einen ersten Abschnitt (72) aufweist, der die Anschlagrippe (50) radial nach innen hin verlängert und sich über den ganzen Umfang der Anschlagrippe erstreckt, wobei der erste Abschnitt (72) eine Stirnfläche des Ablenkteils (74) bildet, die um mehr als 75° geneigt ist bezüglich der zentralen Achse des Muffen-Endes und die insbesondere senkrecht ist zu der zentralen Achse (Y-Y) des Muffen-Endes.

11. Rohrverbindung gemäß Anspruch 9 oder 10, wobei der Ablenkteil einen zweiten Abschnitt (76) aufweist, der sich axial entgegengesetzt zu der Stirnfläche des Ablenkteils (74) an der Innenfläche des Rohrs erstreckt.

12. Rohrverbindung gemäß irgendeinem der vorhergehenden Ansprüche, wobei das Schutzorgan (26) aus einem Material ist, das eine Härte Shore A hat, die zwischen 40 und 80 liegt, und/oder wobei das Schutzorgan (26) aus einem ElastomerMaterial ist, insbesondere einem Copolymer EPDM, einem Copolymer NBR, einem Copolymer SBR, aus Chlorsulfon-Polyethylen, einem Natur-Kautschuk oder einem thermoplastischen Elastomer ist, insbesondere aus PP, aus PE oder aus amorphem PET.

13. Rohrverbindung gemäß irgendeinem der vorhergehenden Ansprüche, **dadurch gekennzeichnet, dass** der Grundkörper einen Eingangskragen (14) aufweist und sich der Muffen-Boden (22) radial nach innen, und gegebenenfalls nach außen, über den Eingangskragen (14) hinausgehend erstreckt.

14. Rohrverbindung gemäß irgendeinem der vorhergehenden Ansprüche, **dadurch gekennzeichnet, dass** der Grundkörper (10) eine Innenbasis (10A) und eine Beschichtung (10B) aufweist, die zumindest auf den Muffen-Boden (22) aufgebracht ist.

## Claims

1. A tubular joint, of the type comprising
- a fitting end (6) connected to a shaft (8), and
- a spigot end (4) that can be inserted into the fitting end (6) and comprising a common portion,
the fitting end (6) also including a base body (10) provided with a bottom groove (20) with a fitting bottom (22),
the fitting end (6) further comprising a protection member (26) positioned on the fitting bottom (22) of the bottom groove and protecting that fitting bottom from contact with the spigot end (4), the protection member (26) comprising an axial bottom stop (27A) and a skirt (27B),
wherein:
- the base body (10) is provided with a fitting groove (12),
- the tubular joint (2) comprises a sealing gasket, positioned in the fitting groove (12) and applied against the spigot end (4) and the fitting end (6), and
- the skirt and the spigot end are suitable for allowing an angular deviation of the spigot end (4) relative to the fitting end (6) of at least 2°, preferably at least 3° and in particular at least 5°, when the spigot end is in partial contact with the axial bottom stop (27A).

2. The tubular joint according to claim 1, wherein:
- the spigot end (4) comprises an outer spigot end surface (4C),
- the skirt (27B) comprises an inner skirt surface (27E), and
- the maximal radial distance (LDA) between the inner skirt surface (27E) and the outer spigot end surface (4C) is comprised between 0.8% and 3.5% of the maximum inner diameter DIG of the bottom groove (20) when the spigot end and the fitting end are aligned.

3. The tubular joint according to claim 2, wherein the maximal radial distance (LDA) is comprised between 3 mm and 20 mm, preferably between 4.75 mm and 19.85 mm.

4. The tubular joint according to any one of claims 1 to 3, wherein the skirt (27B) has a thickness e, and wherein the maximal radial distance (LDA) is comprised between 0.9x and 3x the thickness e.

5. The tubular joint according to any one of claims 1 to 4, **characterized in that** the protection member (26) is a protection ring.

6. The tubular joint according to any one of claims 1 to 5, **characterized in that** the protection member (26) also presses with its end turned toward the shaft (8) on an inner surface (8A) of the shaft over an axial distance of 3 mm, and in particular **in that** the portion of the protection member that covers the inner surface of the shaft has a thickness not exceeding 1 mm.

7. The tubular joint according to any one of the preceding claims, wherein the axial bottom stop (27A) is formed by a stop rib (50), adjacent to the skirt (27B) and defining a stop surface (52) turned toward the inlet for the spigot end, the stop rib having an axial width (BLA).

8. The tubular joint according to claim 7, wherein the fitting end defines a fitting depth PE, which is the axial distance between a front face (14A) of the fitting end and the inlet of the shaft (8), and wherein the ratio of the axial width (BLA) to the fitting depth (PE) is comprised between 0.04 and 0.15.

9. The tubular joint according to claim 7 or 8, wherein the protection member (26) comprises a baffle (70) extending radially inside an inner surface of the shaft (8).

10. The tubular joint according to claim 9, wherein the baffle (70) comprises a first portion (72) that extends the stop rib (50) radially inward and extends over the entire perimeter of the stop rib, the first portion (72) forming a front baffle surface (74) that is inclined by more than 75° relative to the central axis of the fitting end, and which in particular is perpendicular to the central axis (Y-Y) of the fitting end.

11. The tubular joint according to claim 9 or 10, wherein the baffle comprises a second portion (76) extending axially opposite the front baffle surface (74) and over the inner surface of the shaft.

12. The tubular joint according to any one of the preceding claims, wherein the protection member (26) is made from a material having a Shore A hardness comprised between 40 and 80 and/or the protection member (26) is made from an elastomeric material, in particular an EPDM copolymer, an NBR copolymer, an SBR copolymer, chlorosulfonated polyethylene, a natural rubber or a thermoplastic elastomer, or a thermoplastic material, in particular PP, PE or amorphous PET.

13. The tubular joint according to any one of the preceding claims, **characterized in that** the base body comprises an inlet collar (14) and the fitting bottom (22) extends radially inward, and optionally outward, past the inlet collar (14).

14. The tubular joint according to any one of the preceding claims, **characterized in that** the base body (10) comprises a core (10A) and a coating (10B) positioned at least on the fitting bottom (22).
